Europäisches Patentamt

European Patent Office

Office européen des brevets

(19)

(11) Veröffentlichungsnummer : **0 318 035 B1**

(12) **EUROPÄISCHE PATENTSCHRIFT**

(45) Veröffentlichungstag der Patentschrift :
09.11.94 Patentblatt 94/45

(51) Int. Cl.⁵ : **G02C 7/02**

(21) Anmeldenummer : 88119682.8

(22) Anmeldetag : 25.11.88

(54) **Progressives Brillenglas.**

(30) Priorität : 25.11.87 DE 3739974

(43) Veröffentlichungstag der Anmeldung :
31.05.89 Patentblatt 89/22

(45) Bekanntmachung des Hinweises auf die
Patenterteilung :
09.11.94 Patentblatt 94/45

(84) Benannte Vertragsstaaten :
AT CH DE ES FR GB IT LI NL SE

(56) Entgegenhaltungen :
EP-A- 0 039 497
EP-A- 0 291 094
DE-A- 2 044 639
DE-A- 2 439 127
DE-A- 3 116 524
DE-A- 3 331 763
Bergmann/Schaeffer "Lehrbuch der Experimentalphysik", Band III Optik, Seiten 123-128
W.N. Charman "Gradient Index Optics", The
Ophthalmic Optician, Seiten 72-84

(73) Patentinhaber : **Optische Werke G.
Rodenstock
Isartalstrasse 43
D-80469 München (DE)**

(72) Erfinder : **Guilino, Günther
Kriegelsteinerstrasse 3
D-8000 München 70 (DE)**
Erfinder : **Pfeiffer, Herbert
Georg-Hann-Strasse 16
D-8000 München 60 (DE)**
Erfinder : **Altheimer, Helmut
Dreimühlenstrasse 5
D-8000 München 5 (DE)**

(74) Vertreter : **Münich, Wilhelm, Dr.
Kanzlei Münich, Steinmann, Schiller
Wilhelm-Mayr-Str. 11
D-80689 München (DE)**

EP 0 318 035 B1

## Beschreibung

### Technisches Gebiet

Die Erfindung bezieht sich auf ein progressives Brillenglas gemäß dem Oberbegriff des Patentanspruchs 1 bzw. des Patentanspruchs 2.

### Stand der Technik

Bekannte progressive Brillengläser bestehen aus einem Material mit homogenem Brechungsindex; der Anstieg der Wirkung vom Fernteil zum Nahteil wird durch eine entsprechende Gestaltung einer oder beider Linsenflächen erzielt.

Da die Flächengestaltung der bekannten progressiven Brillengläser sehr stark von der sphärischen Form abweicht, ist der Herstellvorgang und insbesondere das Polieren einer "Meridianweise" gefrästen Fläche schwierig und führt häufig zu vergleichsweise großen Abweichungen der gefertigten Fläche von der berechneten Fläche.

Darüberhinaus ist es - zumindest mit einer progressiven Fläche - nicht möglich, die Abbildungsfehler und insbesondere den Astigmatismus und die Verzeichnung über das gesamte Glas klein zu halten.

### Beschreibung der Erfindung

Die Erfindung geht deshalb von der Idee aus, durch ein progressives Brillenglas mit einem sich änderndem Brechungsindex vorteilhafte Eigenschaften zu realisieren.

Brillengläser mit sich änderndem Brechungsindex sind in der Literatur mehrfach diskutiert worden: hierzu wird beispielsweise auf den Übersichtsartikel "Gradient Index Optics" von W. N. Charman (The Ophthalmic Optician, 1981, S.72-84) sowie die dort angegebene Literatur verwiesen.

Wie diesem Artikel (S. 80, linke Spalte) zu entnehmen ist, sind bislang Brillengläser mit variierendem Brechungsindex als Ersatz für Brillengläser mit asphärischen Flächen bei "ähnlich guten" optischen Eigenschaften in Betracht gezogen worden (S. 80, linke Spalte ff.). Die tatsächliche Realisierung eines progressiven Brillenglases mit sich änderndem Brechungsindex ist aber bislang noch nicht bekannt geworden.

Die Ursache hierfür dürfte sein, daß progressive Linsenflächen eine sehr komplizierte Flächengestaltung haben. Deshalb dürfte das Vorurteil bestehen, daß der Ersatz einer derart komplizierten Flächengestaltung durch einen variierenden Brechungsindex zu einer ähnlich komplizierten Brechungsindex-Funktion führen würde, die technisch nicht realisierbar ist.

Erfindungsgemäß ist nun erkannt worden, daß es möglich ist, durch die Verwendung eines variierenden Brechungsindex bei der Herstellung der Linsenflächen so große Vorteile zu erzielen, daß sich insgesamt bei vergleichbaren Abbildungseigenschaften eine vereinfachte Herstellung ergibt.

Der Erfindung liegt deshalb die Aufgabe zugrunde, ein progressives Brillenglas mit variierendem Brechungsindex anzugeben.

Erfindungsgemäß ist erkannt worden, daß sich durch die Verwendung eines variierenden Brechungsindex folgende Möglichkeiten ergeben:

- Durch die Variation des Brechungsindex wird der Wirkungsanstieg entlang einer der geschwungenen Hauptblicklinie folgenden oder in einer Ebene liegenden, der Hauptblicklinie angepaßten Linie erzeugt bzw. verstärkt.

  Als Hauptblicklinie wird dabei diejenige Linie auf der Vorderfläche des Brillenglases bezeichnet, die die Hauptdurchblickpunkte für das Sehen in die Ferne und in die Nähe miteinander verbindet und auf der die Durchstoßpunkte der Sehstrahlen für Zwischenentfernungen in Richtung "geradeaus" liegen. Die Hauptblicklinie ist eine im Fern- und im Nahteil angenäherte senkrecht und im Zwischenteil gewunden verlaufende Linie.

- Durch den variierenden Brechungsindex wird der Astigmatismus entlang der Hauptblicklinie ganz oder teilweise behoben.

- Durch die Verwendung eines Gradientenmediums werden Korrekturen von Abbildungsfehlern seitlich des Hauptmeridians vorgenommen.

Denkt man sich die drei Effekte "Wirkungsanstieg entlang der Hauptblicklinie", "Beseitigung des Astigmatismus entlang der Hauptblicklinie" und "Seitliche Korrekturen" hauptsächlich, teilweise oder nicht von der Variation des Brechungsindex getragen, dann ergeben sich $3^3 = 27$ Kombinationsmöglichkeiten, die sich alle mathematisch charakterisieren lassen.

Diese Aufgabe wird durch die Merkmale der Ansprüche 1 und 2 gelöst.

2

Weiterbildungen der Erfindung sind in den Unteransprüchen angegeben.

## Kurze Beschreibung der Zeichnung

Die Erfindung wird nachstehend anhand von Ausführungsbeispielen unter Bezugnahme auf die Zeichnung näher beschrieben, in der zeigen:

Fig. 1a     perspektivisch zwei progressive Brillengläser vor dem linken bzw. rechten Auge zur Erläuterung der im folgenden verwendeten Begriffe und Größen,

Fig. 1b     einen Schnitt durch ein "System" Auge/Brillenglas,

Fig. 2     den Verlauf der Addition z(y') als Funktion der Koordinate y',

Fig. 3     den Verlauf der Brechzahlfunktion als Funktion der Koordinate y' für x'=0,

Fig. 4     Linien gleicher Brechzahl für ein erstes Ausführungsbeispiel (Fig. 4a) und ein zweites Ausführungsbeispiel (Fig. 4b)

Fig. 5     den Verlauf der "Horizontalkrümmung" auf dem Hauptmeridian als Funktion der Koordinate y',

Fig. 6 a - c     tabellarisch die Pfeilhöhendifferenz zwischen der beim ersten Ausführungsbeispiel zur Korrektur der Abbildungsfehler verwendeten Fläche und einer sphärischen Fläche.

Fig. 7a und b     die Abweichung von der Refraktionsrichtigkeit für die beiden Ausführungsbeispiele nach Fig. 4,

Fig. 8a und b     den Astigmatismus für die beiden Ausführungsbeispiele nach Fig.4.

## Beschreibung von Ausführungsbeispielen

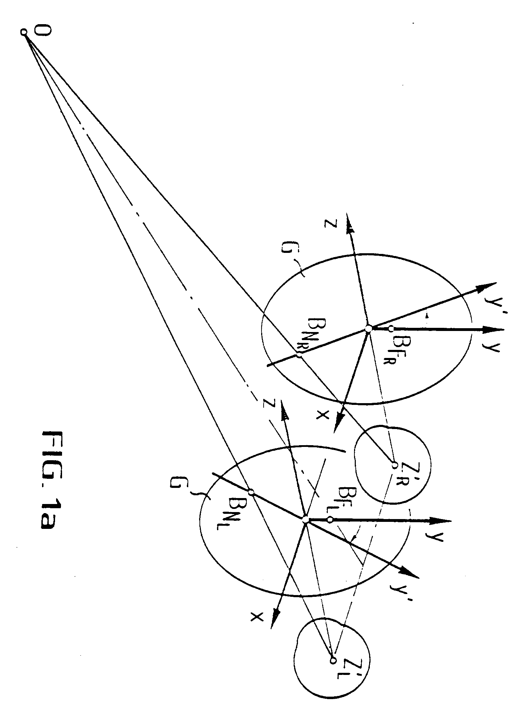

Fig. 1a zeigt perspektivisch die Anordnung zweier progressiver Brillengläser G vor dem linken bzw. rechten Auge A. Dabei ist mit $Z'_{L \; bzw. \; R}$ der optische Augendrehpunkt bezeichnet.

Jedes progressive Brillenglas G weist einen Hauptdurchblickpunkt (Fernbezugspunkt) $B_F$ für das Sehen in die Ferne und einen Hauptdurchblickpunkt (Nahbezugspunkt) $B_N$ für das Sehen in die Nähe auf. Wählt man für jedes Glas ein raumfestes Koordinatensystem x, y, z derart, daß die y-Achse vertikal, die x-Achse horizontal und die z-Achse durch die geometrische Mitte des Glases verläuft, so liegt der Fernbezugspunkt $B_F$ auf der zu dem jeweiligen Glas gehörenden y-Achse. Aufgrund der Konvergenz des Auges bei Blicksenkungen ist jedoch der Nahbezugspunkt $B_N$ nasal (zur Nase hin) versetzt. Um dies zu verdeutlichen, sind in Fig. 1a die Sehstrahlen zu einem "geradeaus" in der Nähe liegenden Objektpunkt 0 eingetragen. Um der Konvergenz der Augen bei Blicksenkung Rechnung zu tragen, ist es deshalb üblich, symmetrische Gläser um einen Winkel $\alpha$, der typischerweise zwischen 7° und 10° beträgt, zu verschwenken, so daß die Symmetrieachse eines Glases im rohrunden Zustand nach dem Einschleifen in die Brillenfassung mit der y'-Achse in Fig. 1a zusammenfällt.

Fig. 1b zeigt einen Schnitt durch ein Auge A und ein in der sog. Gebrauchsstellung angeordnetes Brillenglas G, d.h. ein Brillenglas in der Stellung, in der das in die Brillenfassung eingesetzte Brillenglas vor dem Auge angeordnet ist. In der Gebrauchsstellung weist das Glas eine Vorneigung auf, die bei dem folgenden Beispiel 8° beträgt. Ferner sind aus Fig. 1b der sog. Augendrehpunktsabstand b' und die Abstände $y'_{BF}$ und $y'_{BN}$ des Fern- bzw. Nahbezugspunktes vom Glasscheitel eingetragen. Typische Werte für diese Größen sind:

$$b' = 28,5 \; mm$$
$$y'_{BF} = 4,0 \; mm$$
$$y'_{Bn} = -14,0 \; mm$$

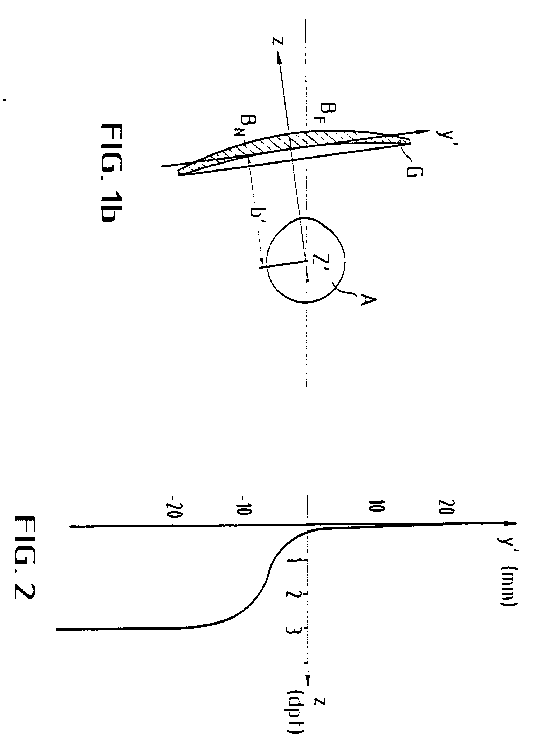

Fig. 2 zeigt einen möglichen Verlauf der Addition z (y') für das Sehen durch ein progressives Brillenglas als Funktion der Koordinate y'. Die Addition z ist die Zunahme des Brechwerts gegenüber der verordneten Fernteilwirkung (Rezeptwert): Bei einer Fernteilwirkung von 2,0 dpt und einer Addition von 3,0 dpt ergibt sich dann eine Nahteilwirkung von 5,0 dpt. Bei dem in Fig. 2 dargestellten Verlauf der Addition z(y') ist die Addition in jedem Punkt entgegengesetzt gleich der reziproken Entfernung eines Objektpunktes O (s. Fig. 1a) gemessen auf dem Hauptstrahl von dessen Durchstoßpunkt durch die Vorderfläche, so daß keine Akkomodationsvorgänge bei einer Blicksenkung von der Ferne zur Nähe erforderlich sind. Der in Fig. 2 wiedergegebene Verlauf der Addition z(y') kann durch folgende Beziehung beschrieben werden:

$$z(y') = -z_o (1 - 1/(1 + e^{-c(y'-y_o)}))$$

mit

$$z_o = 3,0 \; dpt$$
$$c = 0,4508$$
$$y'_o = 0,653$$

Im folgenden werden zwei Ausführungsbeispiele der Erfindung näher erläutert. Aus Gründen der vereinfachten Darstellung sind die beiden Ausführungsbeispiele symmetrische Gläser, d.h. ihre optischen und geometrischen Merkmale sind zu einer Linie, die im folgenden auch als Hauptmeridian des Glases bezeichnet wird, symmetrisch. Beiden Ausführungsbeispielen ist gemeinsam, daß der in Fig. 2 dargestellte Verlauf der Addition $z(y')$ allein durch die Variation des Brechungsindex und nicht durch eine Änderung der Krümmung einer oder beider Flächen längs des Hauptmeridians aufgebracht wird, so daß der Hauptmeridian ein Kreis ist, dessen Radius bei den beiden Ausführungsbeispielen 118,3 mm beträgt.

Ferner sind beiden Ausführungsbeispielen folgende Daten gemeinsam:

- Fernteilwirkung $S'_\infty$:         0,0 dpt
- Addition $z_o$:        3,0 dpt
- Mittendicke $d_m$ :          3 mm
- Brechzahl $n_o$ im geometrischen Mittelpunkt:         1,604
- Flächenbrechwert $D_2$ der augenseitigen Fläche bezogen auf $n_o$        -5,0 dpt
- Durchmesser des rohrunden Glass         66 mm

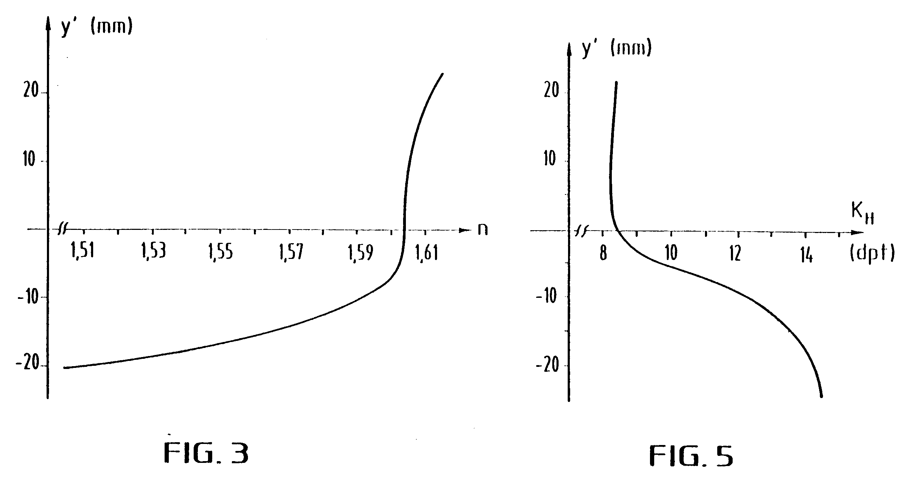

Zur Realisierung eines Verlaufs der Addition $z (y')$ wird bei beiden Ausführungsbeispielen der in Fig. 3 angegebene Verlauf $n (x=0,y')$ der Brechzahl n als Funktion der Koordinate $y'$ verwendet.

Die beiden Ausführungsbeispiele weisen jedoch folgenden Unterschied auf:

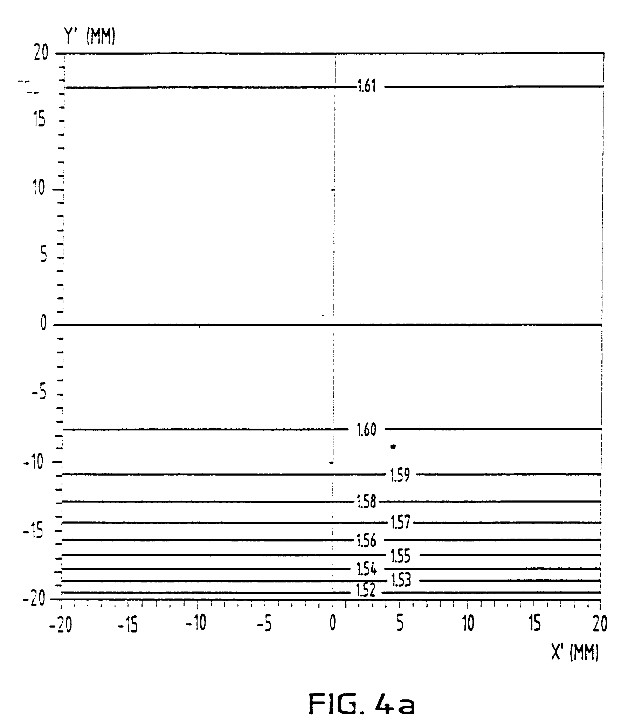

Bei dem ersten Ausführungsbeispiel ist die Brechzahlfunktion ausschließlich eine Funktion der Koordinate $y'$, so daß durch die Variation des Brechungsindex lediglich die Brechwertzunahme längs des Hauptmeridians erzeugt wird. Die sich dann ergebenden Linien gleicher Brechzahl sind in Fig. 4a dargestellt.

Die Korrektur von Abbildungsfehlern in den Bereichen seitlich des Hauptmeridians erfolgt dagegen durch eine entsprechende Gestaltung einer Fläche, die bei dem ersten Ausführungsbeispiel die Vorderfläche ist. Diese Fläche ist bei dem beschriebenen Ausführungsbeispiel so aufgebaut, daß die Schnittlinien von zur x'z-Ebene parallelen Ebenen mit der zur Korrektur der Abbildungsfehler verwendeten Fläche Kegelschnitte sind, deren Exzentrizität eine Funktion von y ist.

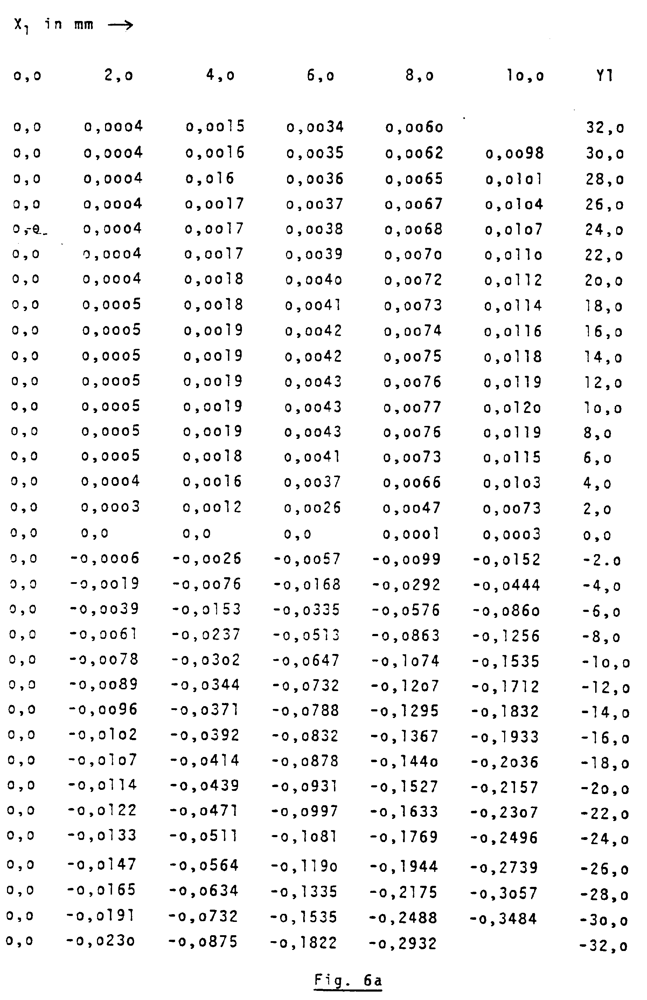

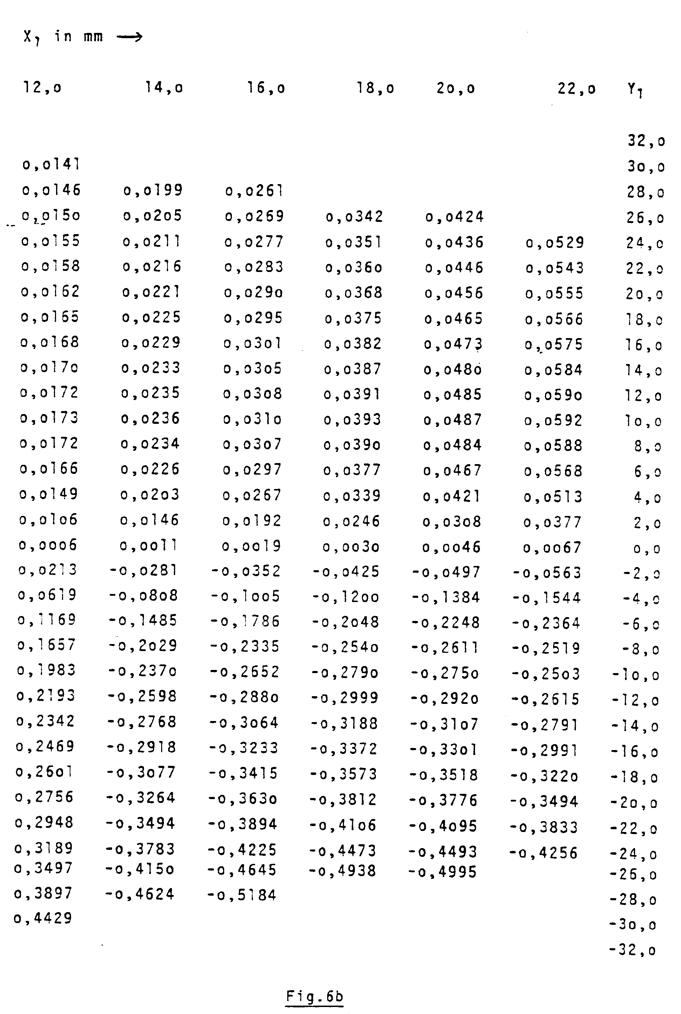

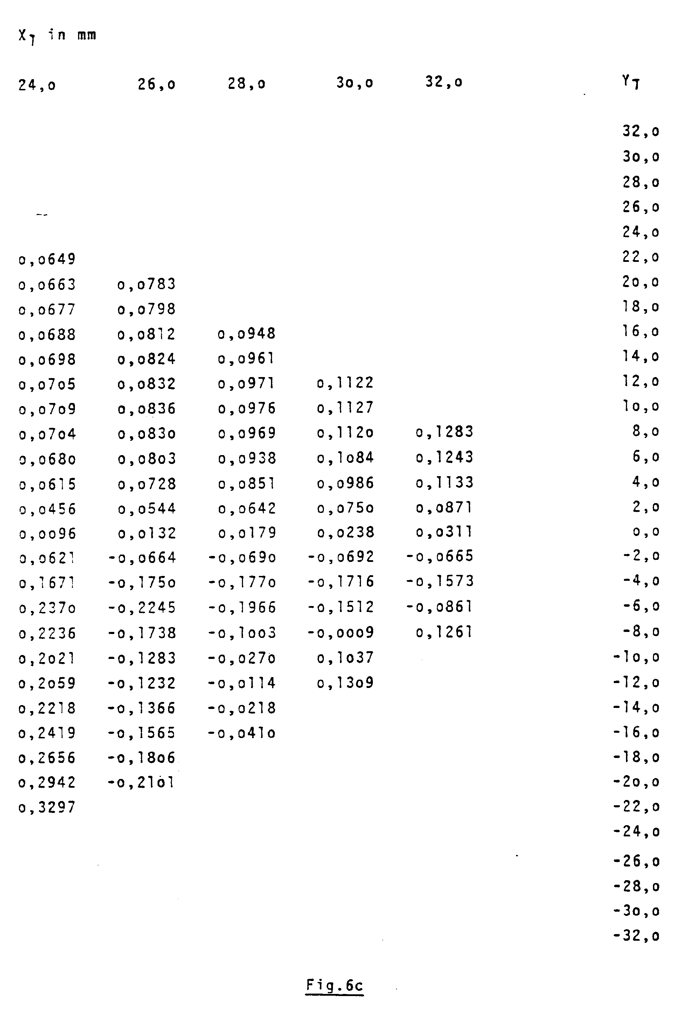

Fig. 5 zeigt den Verlauf der Krümmung (in dpt) der jeweiligen Kegelschnitte auf dem Hauptmeridian als Funktion von $y'$. In den Fig. 6 a bis c ist die Differenz der Pfeilhöhen (in mm) zwischen der erfindungsgemäße zur Korrektur der Abbildungsfehler verwendeten Fläche und einer sphärischen Fläche mit einem Radius, der gleich dem Radius des Hauptmeridians ist, wiedergegeben. Aus dieser Tabelle kann jederzeit der genaue Flächenverlauf und damit beispielsweise die y-Abhängigkeit der Exzentrizität der Kegelschnitte berechnet werden.

Bei dem zweiten Ausführungsbeispiel ist dagegen die Brechzahlfunktion eine Funktion der Koordinaten $y'$ und $x'$, so daß nicht nur die Brechwertzunahme längs des Hauptmeridians, sondern auch die Korrektur von Abbildungsfehlern auf dem Hauptmeridian von der Variation des Brechungsindex getragen wird. Sowohl die Vorderfläche als auch die augenseitige Fläche sind sphärische Flächen.

Ausdrücklich soll darauf hingewiesen werden, daß bei der Optimierung die Korrektur von Abbildungsfehlern nicht beachtet worden ist, und daß sich dennoch Gläser mit sehr guten Abbildungseigenschaften in den seitlichen Bereichen ergeben haben. Eine weitere Verbesserung der Abbildungseigenschaften in den Bereichen seitlich des Hauptmeridians erhält man durch weitere Optimierung der Indexfunktion.

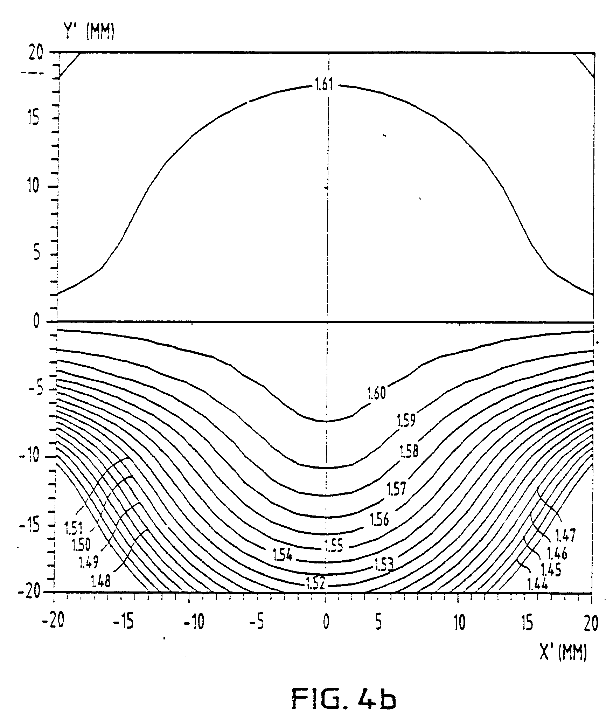

Fig. 4b zeigt die Linien gleicher Brechzahl für das zweite Ausführungsbeispiel.

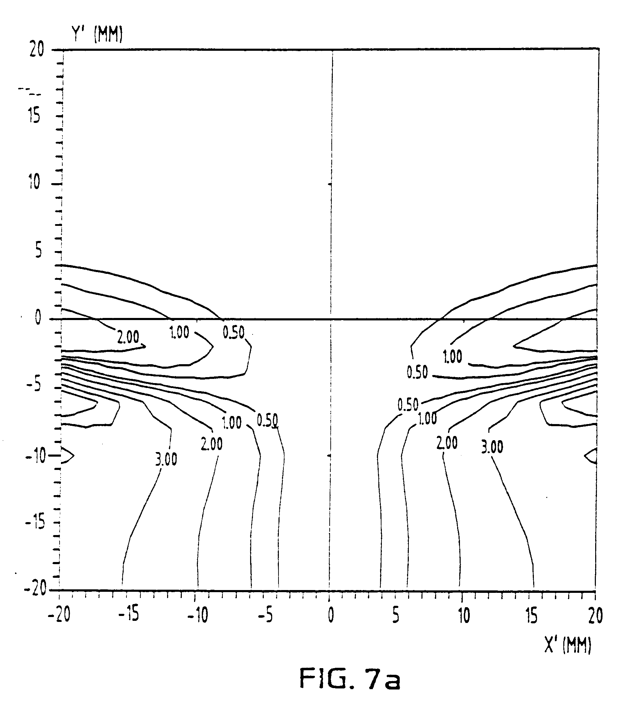

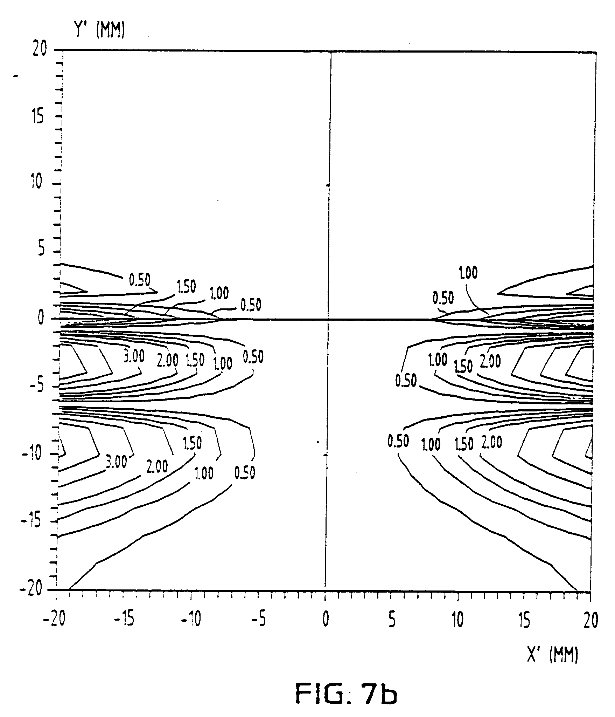

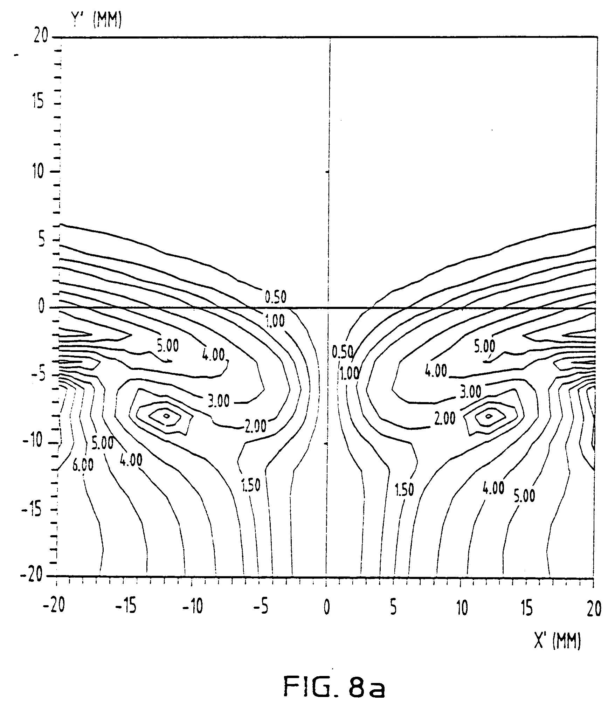

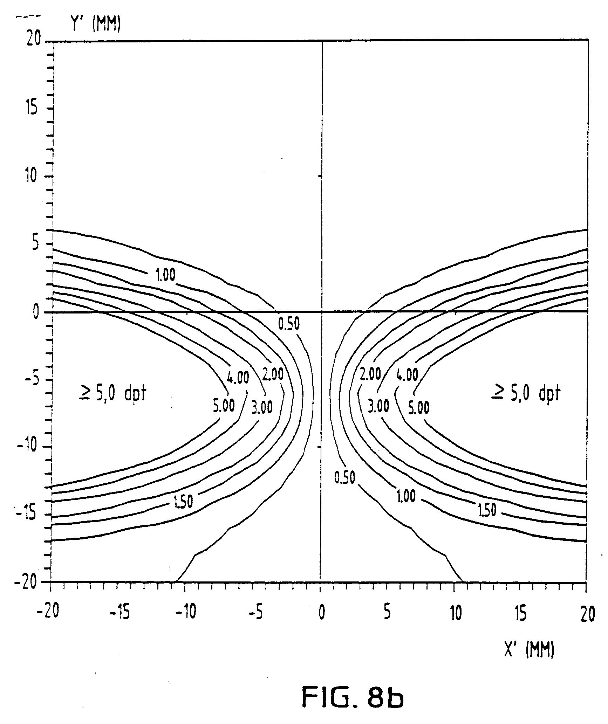

Die Fig. 7 und 8 zeigen den Verlauf der Abweichung von der Refraktionsrichtigkeit und den Astigmatimus in Gebrauchsstellung für die beiden Ausführungsbeispiele (Teilfig. a: erstes Ausführungsbeispiel, Teilfig. b: zweites Ausführungsbeispiel)

Als Refraktionsrichtigkeit wird die Abweichung des mittleren Brechwerts des Brillenglases in einem Punkt $x,y_o$ von der Vorgabe des Brechwerts im Punkt $0,y_o$ gemäß Fig. 2 bezeichnet.

Wie man den Figuren entnehmen kann, ergibt sich ein günstiger Verlauf der Refraktionsrichtigkeit und des Astigmatismus: Der mittlere Brechwert des erfindungsgemäßen progressiven Brillenglases weicht in den Randbereichen der Progressionszone deutlich weniger von dem Brechwert auf dem Hauptmeridian ab als dies bei bekannten Gläsern der Fall ist, bei denen dieWirkungszunahme ausschließlich durch die Flächengestaltung erzielt wird. Insbesondere erhält man in der Progressionszone bei dem ersten Ausführungsbeispiel eine und bei dem zweiten Ausführungsbeispiel drei "Kanäle", in denen sich die Linien konstanten Brechwerts horizontal bis zum Rand des Glases erstrecken. Weiterhin ist der Astigmatismus in der Umgebung des Hauptmeridians gering. Insbesondere bei dem zweiten Ausführungsbeispiel erhält man einen ungewöhnlich großen Nahteil, der bis zu 20mm breit ist.

Die Berechnung der vorstehend beschriebenen Ausführungsbeispiele ist wie folgt erfolgt:

Zur Beschreibung des Strahlenverlaufs und der Abbildungseigenschaften, wie Astigmatismus und Refraktionsfehler, eines Brillenglases mit asphärischen Flächen und Indexgradienten muß für jeden interessierenden Blickwinkel zunächst ein Hauptstrahl vom Augendrehpunkt aus in den Objektraum unter Berücksichtigung der Lage des Brillenglases vor dem Auge durchgerechnet werden.

In einem Gradientenmedium gehorcht der Strahl - wie beispielsweise von E.W.Marchand in "Gradient Index Optics" beschrieben - folgender Differentialgleichung zweiter Ordnung:

$$\frac{d}{ds}\left(n\,\frac{d\vec{r}}{ds}\right) = \nabla n$$

$$\nabla n = \frac{\partial n}{\partial x}\,\vec{e}_1 + \frac{\partial n}{\partial y}\,\vec{e}_2 + \frac{\partial n}{\partial z}\,\vec{e}_3$$

Hierbei sind $\vec{e}_i$ Einheitsvektoren eines kartesischen Koordinantensystems.

Eine numerische Lösung dieser Differentialgleichung liefert beispielsweise das von A.Sharma,D.V,Kamar und A.K. Ghatak in J.Opt.Soc. Am., Vol.21 (1982) beschriebene Runge-Kutta-Verfahren.

Nach der gleichen Methode wie der Hauptstrahl werden auch Nachbarstrahlen, ausgehend von einem Objektpunkt auf dem Hauptstrahl in umgekehrter Richtung wie der Hauptstrahl durchgerechnet, um die Abbildungseigenschaften längs des Hauptstrahls zu bestimmen. Dabei ist es für die Optmierung von Vorteil, wenn die einzelnen Größen durch Spline-Funktionen beschrieben werden.

Bei einer näherungsweisen Lösung der vorstehend beschriebenen Differentialgleichung erhält man für die Brechzahlfunktion:

$$n(x,y) = n(y) + 2n_2(y) * x^2/(1 + (1 - (\chi(y) + 1) * 4n_2{}^2(y) * x^2))^{1/2}$$

bzw.

$$n(x,y') = n(y') + 2n_2(y') * x^2/(1 + (1 - (\chi(y') + 1) * 4n_2{}^2(y') * x^2))^{1/2}$$

hierbei sind $n(y)$, $n_2(y)$ und $\chi(y)$ Funktionen, die sich aus der Lösung der Differntialgleichung ergeben. $n(y)$ kann insbesondere durch eine Taylorreihe beschrieben werden.

Vorstehend ist die Erfindung anhand von Ausführungsbeispielen ohne Beschränkung des allgemeinen Erfindungsgedankens beschrieben worden, innerhalb dessen selbstverständlich die verschiedensten Modifikationen möglich sind.

## Patentansprüche

1. Progressives Brillenglas mit
   - einem Fernteil, dessen Brechwert für das Sehen in die Ferne ausgelegt,
   - einem Nahteil, dessen Brechwert für das Sehen in die Nähe ausgelegt ist,
   - einem Zwischenteil, in dem der Brechwert längs einer Linie (y bzw. y') vom Brechwert des Fernteils wenigstens teilweise kontinuierlich auf den Brechwert des Nahteils zunimmt, und
   - einem Brechungsindex des Glasmaterials, der sich längs dieser Linie (y bzw. y') wenigstens im Zwischenteil ändert und zumindest teilweise zur Zunahme des Brechwerts beiträgt,
     dadurch **gekennzeichnet**, daß der Brechungsindex ausschließlich ein Funktion von y bzw. y' ist, und daß wenigstens eine Fläche des Brillenglases Schnittlinien y=const bzw. y'=const. aufweist, deren Krümmungsradien zur Korrektur der Abbildungsfehler variieren.

2. Progressives Brillenglas mit
   - einem Fernteil, dessen Brechwert für das Sehen in die Ferne ausgelegt,
   - einem Nahteil, dessen Brechwert für das Sehen in die Nähe ausgelegt ist,
   - einem Zwischenteil, in dem der Brechwert längs einer Linie (y bzw. y') vom Brechwert des Fernteils wenigstens teilweise kontinuierlich auf den Brechwert des Nahteils zunimmt,
   - einem Brechungsindex des Glasmaterials, der sich derart ändert, daß die Zunahme des Brechwerts durch die Änderung des Brechungsindex hervorgerufen wird, und
   - bei welchem Glas die Vorderfläche und die augenseitige Fläche rotationssymmetrische Flächen sind,
     dadurch gekennzeichnet, daß sowohl die Zunahme des Brechwertes als auch die Korrektur der Abbildungsfehler ausschließlich durch die Variation des Brechungsindex hervorgerufen werden.

3. Brillenglas nach Anspruch 1 oder 2,

dadurch **gekennzeichnet**, daß die Linie (y-Achse) die vertikale Achse auf dem Glas ist.

4.  Brillenglas nach Anspruch 1 oder 2,
    dadurch **gekennzeichnet**,daß die Linie (y'-Achse) gegenüber der Vertikalen entsprechend der Konvergenz des Augenpaares bei Blicksenkung in die Nähe geschwenkt ist.

5.  Brillenglas nach Anspruch 1 oder nach Anspruch 3 oder 4 unter Ausschluß der Rückbeziehung auf Anspruch 2,
    dadurch **gekennzeichnet**, daß die Variation des Krümmungsradius der Schnittlinien wenigstens in der Umgebung der y- bzw. y'-Achse derart ist, daß die Krümmungsradien mit wachsendem Abstand von der y- bzw. y'-Achse wenigstens im Nahteil größer werden.

6.  Brillenglas nach einem der Ansprüche 1 bis 5, dadurch **gekennzeichnet**, daß die Krümmungsradien für $x'=0$ derart gewählt sind, daß der sagittale Brechwert $S'_{sag}$ nahezu gleich dem meridionalen Brechwert $S'_{mer}$ ist.

7.  Brillenglas nach einem der Ansprüche 2 bis 6 unter Ausschluß der Rückbeziehung auf Anspruch 1,
    dadurch **gekennzeichnet**, daß für zur Brechwertzunahme und zur Korrektur des Astigmatismus beitragende Brechzahl-Funktionen gilt
    $$n(x,y) = n(y) + 2n_2(y) * x^2/ (1 + (1 - (\chi(y) + 1) * 4n_2^2(y) * x^2))^{1/2}$$
    bzw.
    $$n(x,y') = n(y') + 2n_2(y') * x^2/ (1 + (1 - (\chi(y') + 1) * 4n_2^2(y') * x^2))^{1/2}$$
    wobei $n(y)$, $n_2(y)$ und $\chi(y)$ Funktionen von y sind.

8.  Brillenglas nach Anspruch 7,
    dadurch **gekennzeichnet**, daß gilt:
    $$\chi (y) = constant = 0$$

9.  Brillenglas nach Anspruch 7 oder 8,
    dadurch **gekennzeichnet**, daß gilt:
    $$n(y) = a/(b + y) + n_4(y)x^4 + n_6(y)x^6$$
    bzw.
    $$n(y') = a/(b + y') + n_4(y')x'^4 + n_6(y')x'^6$$
    wobei a und b Konstanten sind und $n_4(y)$ und $n_6(y)$ Funktionen von y sind.

## Claims

1.  Progressive spectacle lens with
    - a distance portion whose focal power is designed for vision at distance,
    - a near portion whose focal power is designed for vision at near,
    - an intermediate portion in which the focal power along a line (y or y') increases at least partially continuously from the focal power of the distance portion to the focal power of the near portion, and
    - a refractive index of the lens material which varies along this line (y or y') at least in the intermediate portion and which contributes at least partially to the increase in the focal power,
    characterised by the fact that the refractive index is exclusively a function of y or y', and
    that at least one surface of the spectacle lens possesses lines of intersection y=const or y'= const whose radii of curvature vary to correct imaging errors.

2.  Progressive spectacle lens with
    - a distance portion whose focal power is designed for vision at distance,
    - a near portion whose focal power is designed for vision at near,
    - an intermediate portion in which the focal power along a line (y or y') increases at least partially continuously from the focal power of the distance portion to the focal power of the near portion, and
    - a refractive index of the lens material which varies in such a way that the increase in the focal power is produced by the change in the refractive index, and
    - in which lens the front surface and the back surface are rotationally symmetrical surfaces,
    characterised by the fact that both the increase in the focal power and the correction of the imaging errors are caused exclusively by the variation in the refractive index.

3. Spectacle lens in accordance with either of claims 1 or 2,
characterised by the fact that the line (y axis) is the vertical axis on the lens.

4. Spectacle lens in accordance with either of claims 1 or 2,
characterised by the fact that the line (y′ axis) is rotated against the vertical in accordance with the convergence of the pair of eyes when the gaze is lowered for near vision.

5. Spectacle lens in accordance with clam 1 or claim 3 or claim 4 but with exclusion of reference to claim 2, characterised by the fact that the variation in the radius of curvature of the lines of intersection at least in the proximity of the y or the y′ axis is such that the curvature radii become larger at least in the near portion with increasing distance from the y or the y′ axis.

6. Spectacle lens in accordance with any of claims 1 to 5,
characterised by the fact that the radii of curvature for x′=0 are selected in such a way that the sagittal focal power $S'_{sag}$ is almost identical to the meridional focal power $S'_{mer}$.

7. Spectacle lens according to any of claims 2 to 6 and to the exclusion of any reference to claim 1, characterised by the fact that the following applies to refractive index functions contributing to the increase in focal power and to the correction of astigmatism
$$n(x,y) = n(y) + 2n_2(y) * x^2/ (1 + (1 - (\chi(y) + 1) * 4n^2_2(y) * x^2))^{1/2}$$
or
$$n(x,y') = n(y') + 2n_2(y') * x^2/ (1 + (1 - (\chi(y') + 1) * 4n^2_2(y') * x^2))^{1/2}$$
where $n(y), n_2(y)$ and $\chi(y)$ are functions of y.

8. Spectacle lens in accordance with claim 7,
characterised by the fact that
$$\chi(y) \text{ constant } = 0$$
applies.

9. Spectacle lens in accordance with either of claims 7 or 8,
characterised by the fact that
$$n(y) = a/(b + y) + n_4(y)x^4 + n_6(y)x6$$
or
$$n(y') = a/(b + y') + n_4(y')x^4 + n_6(y')x6$$
applies
where a and b are constants and $n_4(y)$ and $n_6(y)$ are functions of y.

**Revendications**

1. Verre de lunette progressif comprenant
   - une section de vision de loin dont la valeur de réfraction est prévue pour une vision lointaine,
   - une section de vision de près dont la valeur de réfraction est prévue pour la vision rapprochée,
   - une section intermédiaire dans laquelle la valeur de réfraction augmente le long d'une ligne (y ou y′) entre la valeur de réfraction de la section de vision de loin et au moins en partie de façon continue jusqu'à la valeur de réfraction de la section de vision de près, et
   - un indice de réfraction du verre qui se modifie le long de cette ligne (y ou y′) au moins dans la section intermédiaire et contribue au moins en partie à l'augmentation de la valeur de réfraction,
      caractérisé en ce que l'indice de réfraction est exclusivement fonction de y ou de y′ et qu'au moins une surface du verre de lunettes comprend des lignes d'intersection y constante ou y′ = constante, dont les rayons de courbure varient en vue de la correction des défauts d'image.

2. Verre de lunette progressif comprenant:
   - une section de vision de loin dont la valeur de réfraction est prévue pour une vision lointaine,
   - une section de vision de près dont la valeur de réfraction est prévue pour la vision rapprochée,
   - une section intermédiaire dans laquelle la valeur de réfraction augmente le long d'une ligne (y ou y′) entre la valeur de réfraction de la section de vision de loin et au moins en partie de façon continue jusqu'à la valeur de réfraction de la section de vision de près,

- un indice de réfraction du verre qui se modifie de manière que l'augmentation de la valeur de réfraction soit provoquée par la modification de l'indice de réfraction et
- dont la surface avant et la surface située du côté de l'oeil du verre sont des surfaces à symétrie de rotation,

    caractérisé en ce qu'aussi bien l'augmentation de la valeur de réfraction que la correction des défauts d'image sont obtenues exclusivement par la variation de l'indice de réfraction.

3.   Verre de lunettes selon la revendication 1 ou 2, caractérisé en ce que la ligne (axe y) est l'axe vertical sur le verre.

4.   Verre de lunettes selon la revendication 1 ou 2, caractérisé en ce que la ligne (axe y') est pivotée par rapport à la ligne verticale conformément à la convergence des deux yeux lors de l'abaissement du regard dans la zone de vision de près.

5.   Verre de lunettes selon la revendication 1 ou selon la revendication 3 ou 4 avec exclusion d'un rattachement à la revendication 2, caractérisé en ce que la variation du rayon de courbure des lignes d'intersection au moins dans l'environnement de l'axe y ou de l'axe y' est telle que le rayon de courbure augmente à mesure qu'augmente la distance de l'axe y ou de l'axe y' au moins dans la section pour vision de près.

6.   Verre de lunettes selon l'une quelconque des revendications 1 à 5, caractérisé en ce que les rayons de courbure pour $x'=0$ sont choisis de manière que la valeur de réfraction sagittale $S'_{sag}$ soit sensiblement égale à la valeur de réfraction méridienne $S'_{mér}$.

7.   Verre de lunettes selon l'une quelconque des revendications 2 à 6 à l'exclusion d'un rattachement à la revendication 1, caractérisé en ce qu'on a pour les fonctions de l'indice de réfraction qui contribuent à l'augmentation de la valeur de réfraction et la correction de l'astigmatisme:

$$n(x,y) = n(y) + 2n_2(y) * x^2/(1 + (1 - (\chi(y) + 1) * 4n_2{}^2(y) * x^2))^{1/2}$$

ou

$$n(x,y') = n(y') + 2n_2(y') * x^2/(1 + (1 - (\chi(y') + 1) * 4n_2{}^2(y') * x^2))^{1/2}$$

où $n(y)$, $n_2(y)$ et $\chi(y)$ sont des fonctions de y.

8.   Verre de lunettes selon la revendication 7, caractérisé en ce qu'on a:

$$\chi(y) = \text{constante} = 0$$

9.   Verre de lunettes selon la revendication 7 ou 8, caractérisé en ce qu'on a:

$$n(y) = a/(b + y) + n_4(y)x^4 + n_6(y)x^6$$

ou

$$n(y') = a/(b + y') + n_4(y')x'^4 + n_6(y')x'^6$$

où a et b sont des constantes, et $n_4(y)$ et $n_6(y)$ sont des fonctions de y.

FIG. 1a

FIG. 1b

FIG. 2

FIG. 3

FIG. 5

11

FIG. 4a

FIG. 4b

$X_1$ in mm $\longrightarrow$

| 0,0 | 2,0 | 4,0 | 6,0 | 8,0 | 1o,0 | Y1 |
|---|---|---|---|---|---|---|
| 0,0 | 0,0004 | 0,0015 | 0,0034 | 0,0060 |  | 32,0 |
| 0,0 | 0,0004 | 0,0016 | 0,0035 | 0,0062 | 0,0098 | 30,0 |
| 0,0 | 0,0004 | 0,016 | 0,0036 | 0,0065 | 0,01o1 | 28,0 |
| 0,0 | 0,0004 | 0,0017 | 0,0037 | 0,0067 | 0,01o4 | 26,0 |
| 0,e. | 0,0004 | 0,0017 | 0,0038 | 0,0068 | 0,01o7 | 24,0 |
| 0,0 | 0,0004 | 0,0017 | 0,0039 | 0,0070 | 0,01lo | 22,0 |
| 0,0 | 0,0004 | 0,0018 | 0,0040 | 0,0072 | 0,0112 | 20,0 |
| 0,0 | 0,0005 | 0,0018 | 0,0041 | 0,0073 | 0,0114 | 18,0 |
| 0,0 | 0,0005 | 0,0019 | 0,0042 | 0,0074 | 0,0116 | 16,0 |
| 0,0 | 0,0005 | 0,0019 | 0,0042 | 0,0075 | 0,0118 | 14,0 |
| 0,0 | 0,0005 | 0,0019 | 0,0043 | 0,0076 | 0,0119 | 12,0 |
| 0,0 | 0,0005 | 0,0019 | 0,0043 | 0,0077 | 0,012o | 1o,0 |
| 0,0 | 0,0005 | 0,0019 | 0,0043 | 0,0076 | 0,0119 | 8,0 |
| 0,0 | 0,0005 | 0,0018 | 0,0041 | 0,0073 | 0,0115 | 6,0 |
| 0,0 | 0,0004 | 0,0016 | 0,0037 | 0,0066 | 0,01o3 | 4,0 |
| 0,0 | 0,0003 | 0,0012 | 0,0026 | 0,0047 | 0,0073 | 2,0 |
| 0,0 | 0,0 | 0,0 | 0,0 | 0,0001 | 0,0003 | 0,0 |
| 0,0 | -0,0006 | -0,0026 | -0,0057 | -0,0099 | -0,0152 | -2,0 |
| 0,0 | -0,0019 | -0,0076 | -0,0168 | -0,0292 | -0,0444 | -4,0 |
| 0,0 | -0,0039 | -0,0153 | -0,0335 | -0,0576 | -0,0860 | -6,0 |
| 0,0 | -0,0061 | -0,0237 | -0,0513 | -0,0863 | -0,1256 | -8,0 |
| 0,0 | -0,0078 | -0,03o2 | -0,0647 | -0,1o74 | -0,1535 | -1o,0 |
| 0,0 | -0,0089 | -0,0344 | -0,0732 | -0,12o7 | -0,1712 | -12,0 |
| 0,0 | -0,0096 | -0,0371 | -0,0788 | -0,1295 | -0,1832 | -14,0 |
| 0,0 | -0,01o2 | -0,0392 | -0,0832 | -0,1367 | -0,1933 | -16,0 |
| 0,0 | -0,01o7 | -0,0414 | -0,0878 | -0,144o | -0,2o36 | -18,0 |
| 0,0 | -0,0114 | -0,0439 | -0,0931 | -0,1527 | -0,2157 | -20,0 |
| 0,0 | -0,0122 | -0,0471 | -0,0997 | -0,1633 | -0,23o7 | -22,0 |
| 0,0 | -0,0133 | -0,0511 | -0,1o81 | -0,1769 | -0,2496 | -24,0 |
| 0,0 | -0,0147 | -0,0564 | -0,119o | -0,1944 | -0,2739 | -26,0 |
| 0,0 | -0,0165 | -0,0634 | -0,1335 | -0,2175 | -0,3o57 | -28,0 |
| 0,0 | -0,0191 | -0,0732 | -0,1535 | -0,2488 | -0,3484 | -30,0 |
| 0,0 | -0,023o | -0,0875 | -0,1822 | -0,2932 |  | -32,0 |

Fig. 6a

$X_1$ in mm ⟶

| 12,0 | 14,0 | 16,0 | 18,0 | 20,0 | 22,0 | $Y_1$ |
|---|---|---|---|---|---|---|
| | | | | | | 32,0 |
| 0,0141 | | | | | | 30,0 |
| 0,0146 | 0,0199 | 0,0261 | | | | 28,0 |
| 0,0150 | 0,0205 | 0,0269 | 0,0342 | 0,0424 | | 26,0 |
| 0,0155 | 0,0211 | 0,0277 | 0,0351 | 0,0436 | 0,0529 | 24,0 |
| 0,0158 | 0,0216 | 0,0283 | 0,0360 | 0,0446 | 0,0543 | 22,0 |
| 0,0162 | 0,0221 | 0,0290 | 0,0368 | 0,0456 | 0,0555 | 20,0 |
| 0,0165 | 0,0225 | 0,0295 | 0,0375 | 0,0465 | 0,0566 | 18,0 |
| 0,0168 | 0,0229 | 0,0301 | 0,0382 | 0,0473 | 0,0575 | 16,0 |
| 0,0170 | 0,0233 | 0,0305 | 0,0387 | 0,0480 | 0,0584 | 14,0 |
| 0,0172 | 0,0235 | 0,0308 | 0,0391 | 0,0485 | 0,0590 | 12,0 |
| 0,0173 | 0,0236 | 0,0310 | 0,0393 | 0,0487 | 0,0592 | 10,0 |
| 0,0172 | 0,0234 | 0,0307 | 0,0390 | 0,0484 | 0,0588 | 8,0 |
| 0,0166 | 0,0226 | 0,0297 | 0,0377 | 0,0467 | 0,0568 | 6,0 |
| 0,0149 | 0,0203 | 0,0267 | 0,0339 | 0,0421 | 0,0513 | 4,0 |
| 0,0106 | 0,0146 | 0,0192 | 0,0246 | 0,0308 | 0,0377 | 2,0 |
| 0,0006 | 0,0011 | 0,0019 | 0,0030 | 0,0046 | 0,0067 | 0,0 |
| 0,0213 | -0,0281 | -0,0352 | -0,0425 | -0,0497 | -0,0563 | -2,0 |
| 0,0619 | -0,0808 | -0,1005 | -0,1200 | -0,1384 | -0,1544 | -4,0 |
| 0,1169 | -0,1485 | -0,1786 | -0,2048 | -0,2248 | -0,2364 | -6,0 |
| 0,1657 | -0,2029 | -0,2335 | -0,2540 | -0,2611 | -0,2519 | -8,0 |
| 0,1983 | -0,2370 | -0,2652 | -0,2790 | -0,2750 | -0,2503 | -10,0 |
| 0,2193 | -0,2598 | -0,2880 | -0,2999 | -0,2920 | -0,2615 | -12,0 |
| 0,2342 | -0,2768 | -0,3064 | -0,3188 | -0,3107 | -0,2791 | -14,0 |
| 0,2469 | -0,2918 | -0,3233 | -0,3372 | -0,3301 | -0,2991 | -16,0 |
| 0,2601 | -0,3077 | -0,3415 | -0,3573 | -0,3518 | -0,3220 | -18,0 |
| 0,2756 | -0,3264 | -0,3630 | -0,3812 | -0,3776 | -0,3494 | -20,0 |
| 0,2948 | -0,3494 | -0,3894 | -0,4106 | -0,4095 | -0,3833 | -22,0 |
| 0,3189 | -0,3783 | -0,4225 | -0,4473 | -0,4493 | -0,4256 | -24,0 |
| 0,3497 | -0,4150 | -0,4645 | -0,4938 | -0,4995 | | -26,0 |
| 0,3897 | -0,4624 | -0,5184 | | | | -28,0 |
| 0,4429 | | | | | | -30,0 |
| | | | | | | -32,0 |

Fig.6b

$X_T$ in mm

| 24,0 | 26,0 | 28,0 | 30,0 | 32,0 | $Y_T$ |
|---|---|---|---|---|---|
| | | | | | 32,0 |
| | | | | | 30,0 |
| | | | | | 28,0 |
| -- | | | | | 26,0 |
| | | | | | 24,0 |
| 0,0649 | | | | | 22,0 |
| 0,0663 | 0,0783 | | | | 20,0 |
| 0,0677 | 0,0798 | | | | 18,0 |
| 0,0688 | 0,0812 | 0,0948 | | | 16,0 |
| 0,0698 | 0,0824 | 0,0961 | | | 14,0 |
| 0,0705 | 0,0832 | 0,0971 | 0,1122 | | 12,0 |
| 0,0709 | 0,0836 | 0,0976 | 0,1127 | | 10,0 |
| 0,0704 | 0,0830 | 0,0969 | 0,1120 | 0,1283 | 8,0 |
| 0,0680 | 0,0803 | 0,0938 | 0,1084 | 0,1243 | 6,0 |
| 0,0615 | 0,0728 | 0,0851 | 0,0986 | 0,1133 | 4,0 |
| 0,0456 | 0,0544 | 0,0642 | 0,0750 | 0,0871 | 2,0 |
| 0,0096 | 0,0132 | 0,0179 | 0,0238 | 0,0311 | 0,0 |
| 0,0621 | -0,0664 | -0,0690 | -0,0692 | -0,0665 | -2,0 |
| 0,1671 | -0,1750 | -0,1770 | -0,1716 | -0,1573 | -4,0 |
| 0,2370 | -0,2245 | -0,1966 | -0,1512 | -0,0861 | -6,0 |
| 0,2236 | -0,1738 | -0,1003 | -0,0009 | 0,1261 | -8,0 |
| 0,2021 | -0,1283 | -0,0270 | 0,1037 | | -10,0 |
| 0,2059 | -0,1232 | -0,0114 | 0,1309 | | -12,0 |
| 0,2218 | -0,1366 | -0,0218 | | | -14,0 |
| 0,2419 | -0,1565 | -0,0410 | | | -16,0 |
| 0,2656 | -0,1806 | | | | -18,0 |
| 0,2942 | -0,2101 | | | | -20,0 |
| 0,3297 | | | | | -22,0 |
| | | | | | -24,0 |
| | | | | | -26,0 |
| | | | | | -28,0 |
| | | | | | -30,0 |
| | | | | | -32,0 |

Fig.6c

FIG. 7a

FIG: 7b

FIG. 8a

FIG. 8b